# EUROPEAN PATENT APPLICATION

(11) **EP 4 510 430 A1**
(43) Date of publication of application: **19.02.2025**
(21) Application number: 22937442.6
(22) Date of filing: 14.04.2022
(51) Int. Cl.: H02K 5/00

(54) **DRIVE DEVICE**

(71) Applicant: MITSUBISHI ELECTRIC CORPORATION, Chiyoda-ku Tokyo 100-8310 (JP)
(72) Inventor: NAGAO, Takashi, Tokyo 100-8310 (JP); SONODA, Isao, Tokyo 100-8310 (JP); UNEME, Yutaka, Tokyo 100-8310 (JP); FUNABIKI, Yusuke, Tokyo 100-8310 (JP); ARAKI, Rei, Tokyo 100-8310 (JP)
(74) Representative: Hoffmann Eitle
(86) International application number: PCT/JP2022/017787
(87) International publication number: WO 2023/199463

(57) **Abstract**

A drive device, which is a drive device driving a motor having a rotating shaft, includes a power board on which an inverter circuit driving the motor is mounted, a control board on which a control circuit controlling driving of the motor is mounted and disposed to face the power board in an axial direction of the rotating shaft, an inter-board connector electrically connecting the inverter circuit and the control circuit, and a connector assembly, in which the power board, the control board, and the connector assembly are arranged in this order in the axial direction, and the connector assembly includes a first connector terminal connected to the control board to transmit a signal to the control circuit, and a second connector terminal connected to the power board to supply power to the inverter circuit.

## Description

### [Technical Field]

The present disclosure relates to a drive device.

### [Background Art]

The drive device described in Patent Document 1 includes two boards facing each other in an axial direction of a rotating shaft of a motor. The two boards include a first board close to the motor in the axial direction and a second board far from the motor in the axial direction. A plurality of holes are formed in each of the first board and the second board. The first board and the second board are electrically connected by a plurality of connection pins press-fitted into the plurality of holes.

### [Citation List]

### [Patent Document]

[Patent Document 1]
PCT International Publication No. WO 2018/123880

### [Summary of Invention]

### [PROBLEM TO BE SOLVED BY THE INVENTION]

For example, there are cases in which a drive device used in an electric power steering device (for example, see Patent Document 1) has a connector connected to a board. The connector has a role of drawing battery power, a torque sensor signal, a vehicle communication signal, and the like, which are used to control rotation of the motor, from the outside of the drive device into the inside to supply power and signals to the board.

In a drive device having a connector, a configuration in which the connector and the second board are connected, and furthermore, the second board and the first board are connected may be employed. In this case, power and the like transmitted from the outside of the drive device to the connector are supplied to the first board via the second board. However, in such a configuration, a connection mechanism connecting the connector, the first board, and the second board each other may become enlarged, and a size of the drive device may increase.

The present disclosure has been made to solve the above-described problems, and an objective thereof is to provide a drive device in which it is possible to easily realize reduction in size.

### [MEANS TO SOLVE THE PROBLEM]

A drive device according to the present disclosure is a drive device driving a motor having a rotating shaft and includes a power board on which an inverter circuit driving the motor is mounted, a control board on which a control circuit controlling driving of the motor is mounted and disposed to face the power board in an axial direction of the rotating shaft, an inter-board connector electrically connecting the inverter circuit and the control circuit, and a connector assembly, in which the power board, the control board, and the connector assembly are arranged in this order in the axial direction, and the connector assembly includes a first connector terminal connected to the control board to transmit a signal to the control circuit, and a second connector terminal connected to the power board to supply power to the inverter circuit.

### [EFFECTS OF THE INVENTION]

According to the present disclosure, it is possible to provide a drive device in which it is possible to easily realize reduction in size.

### [Brief Description of Drawings]

FIG. 1 is a cross-sectional view illustrating a drive device and an electric power steering device according to embodiment 1.
FIG. 2 is a view illustrating a heat dissipation structure according to embodiment 1.
FIG. 3 is a cross-sectional view illustrating a drive device according to a modified example of embodiment 1.
FIG. 4 is a view of a power board and a control board according to embodiment 1 from an axial direction.
FIG. 5 is a view of a power board and a control board according to embodiment 2 from an axial direction.
FIG. 6 is a view of a power board and a control board according to embodiment 3 from an axial direction.
FIG. 7 is a view illustrating a heat sink according to embodiment 4.

### [Description of Embodiments]

### Embodiment 1.

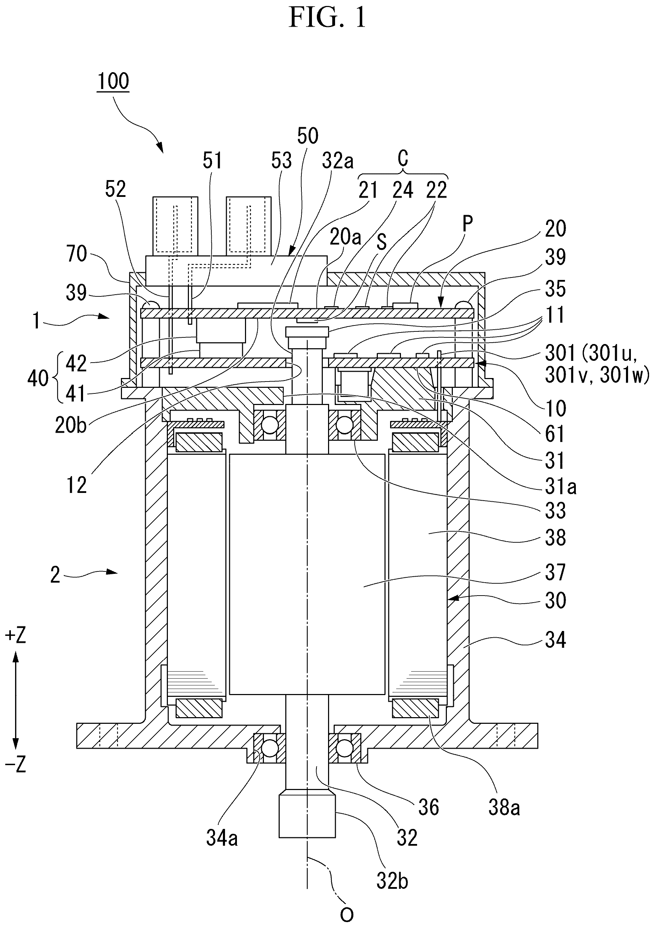

FIG. 1 is a cross-sectional view of a drive device 1 and an electric power steering device 100 according to embodiment 1. The electric power steering device 100 according to the present embodiment includes the drive device 1 and a motor 2. The drive device 1 according to the present embodiment includes a power board 10, a control board 20, an inter-board connector 40, a connector assembly 50, and a cover 70. The motor 2 has a rotating shaft 32.

In the following description, a direction in which a central axis O of the rotating shaft 32 extends may be referred to as an axial direction Z. The axial direction Z is also a thickness direction of the power board 10 and the control board 20. In the present embodiment, the drive device 1 and the motor 2 are arranged in the axial direction Z. In the axial direction Z, a direction directed to the drive device 1 from the motor 2 is referred to as an upward direction, and may be expressed as a +Z direction. In the axial direction Z, a direction directed to the motor 2 from the drive device 1 is referred to as a downward direction, and may be expressed as a -Z direction. A view from the axial direction Z may be referred to as a plan view. In a plan view, a direction intersecting the central axis O of the rotating shaft 32 may be referred to as a radial direction, and a direction of revolving around the central axis O may be referred to as a circumferential direction.

As the motor 2, for example, a permanent magnet synchronous motor or the like may be employed. The motor 2 according to the present embodiment is a three-phase brushless motor. In the present specification, three phases of the motor 2 are represented using U, V, and W. As illustrated in FIG. 1, the motor 2 according to the present embodiment includes a motor main body 30 and a frame 34.

The frame 34 according to the present embodiment has a bottomed cylindrical shape that extends in the axial direction Z. The motor main body 30 is positioned inside the frame 34. A rear housing 31 that covers an upper end (opening end) of the frame 34 is provided at an upper part of the motor main body 30. The motor main body 30 is housed in the rear housing 31 and the frame 34. The rear housing 31 has a role of preventing foreign object from entering the inside of the frame 34.

The motor main body 30 includes the rotating shaft 32, a rotor 37, and a stator 38. The rotating shaft 32 has an input end 32a positioned at an upper part and an output end 32b positioned at a lower part. An object to be driven (for example, a steering system of a vehicle) is connected to the output end 32b.

The rotor 37 is provided around the rotating shaft 32 and is fixed to the rotating shaft 32. A plurality of permanent magnets (not illustrated) are disposed on an outer circumferential surface of the rotor 37. The stator 38 is disposed on an outer circumferential side of the rotor 37 with a gap therebetween. The stator 38 is fixed inside the frame 34. The stator 38 has a plurality of windings 38a. In the present embodiment, the plurality of windings 38a include at least one winding 38a corresponding to the U phase of the motor 2, at least one winding 38a corresponding to the V phase, and at least one winding 38a corresponding to the W phase.

A first through hole 31a penetrating the rear housing 31 in the axial direction Z is formed at a center portion of the rear housing 31 in a plan view. The input end 32a of the rotating shaft 32 is inserted through the first through hole 31a. Similarly, a second through hole 34a penetrating a bottom wall of the frame 34 in the axial direction Z is formed at a center portion of the bottom wall of the frame 34 in a plan view. The output end 32b of the rotating shaft 32 is inserted through the second through hole 34a. Also, a first bearing 33 is provided in the first through hole 31a, and a second bearing 36 is provided in the second through hole 34a. The bearings 33 and 36 support the rotating shaft 32 in a state in which the rotating shaft 32 is smoothly rotatable. Thereby, the rotor 37 fixed to the rotating shaft 32 also is smoothly rotatable on an inner circumferential side of the stator 38.

In the present embodiment, a sensor magnet 35 is attached to the input end 32a of the rotating shaft 32. The sensor magnet 35 includes at least one north pole and at least one south pole. The sensor magnet 35 rotates together with the rotating shaft 32. Therefore, a magnetic field generated by the sensor magnet 35 changes as the rotating shaft 32 rotates.

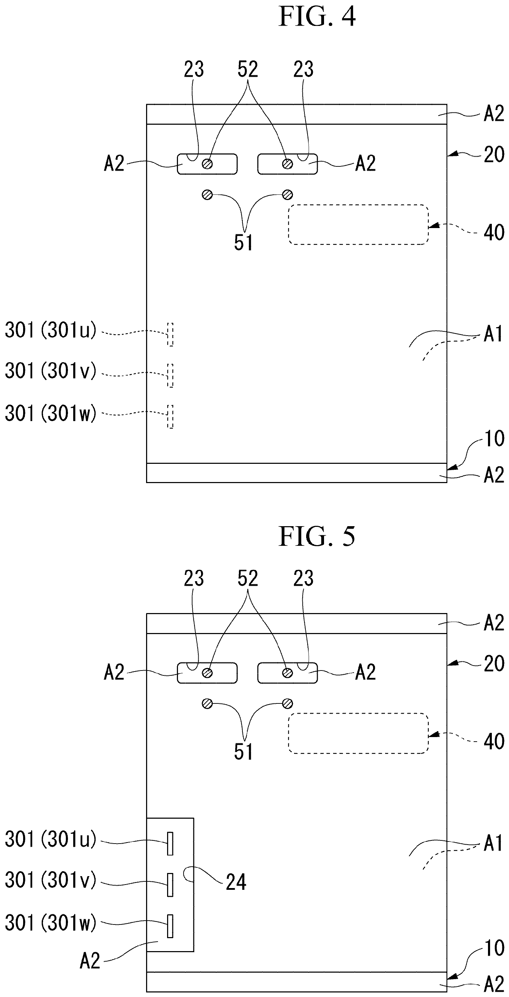

The motor 2 has a plurality of terminals 301. Although not illustrated, the terminals 301 are each electrically connected to the winding 38a of the motor 2. As illustrated in FIG. 1, the terminals 301 protrude upward from the stator 38 and penetrate the rear housing 31 in the axial direction Z. In the present embodiment, the plurality of terminals 301 include a terminal 301u connected to the U-phase winding 38a, a terminal 301v connected to the V-phase winding 38a, and a terminal 301w connected to the W-phase winding 38a (not illustrated in FIG. 1, see FIG. 4).

As the power board 10 and the control board 20, for example, a printed circuit board made of glass epoxy may be used. Alternatively, as the boards 10 and 20, a so-called metal board in which a wiring pattern is provided on an aluminum base may be used. However, types of the boards 10 and 20 are not limited to these, and may be changed as appropriate as long as they enable mounting of electronic parts and making electrical connections.

As illustrated in FIG. 1, an inverter circuit 11 for driving the motor 2 is mounted on the power board 10. Examples of electronic parts constituting the inverter circuit 11 include a field effect transistor (FET), a smoothing capacitor, a choke coil, and the like. The field effect transistor switches a current flowing into the motor 2. The smoothing capacitor suppresses change in voltage associated with the switching of the current. The choke coil suppresses emission of noise to the outside of the drive device 1 and also suppresses an inflow of noise to the inside of the drive device 1. The power board 10 is electrically connected to the terminals 301 of the motor 2.

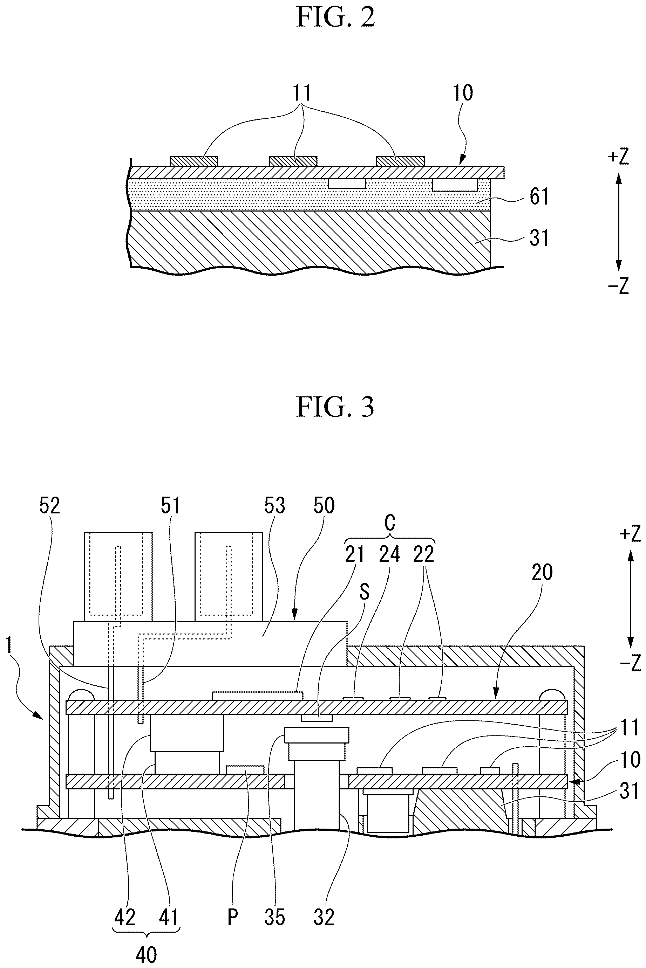

As illustrated in FIG. 2, the drive device 1 may have a heat dissipation structure 61 in contact with both a lower surface of the power board 10 and an upper surface of the rear housing 31. The heat dissipation structure 61 dissipates heat generated by the electronic parts constituting the inverter circuit 11 to the rear housing 31. More specifically, the heat generated by the electronic parts constituting the inverter circuit 11 is absorbed, and furthermore, the absorbed heat is released to the rear housing 31. As the heat dissipation structure 61, for example, heat dissipation grease may be used. If the drive device 1 has the heat dissipation structure 61 described above, it is possible to cause the rear housing 31 to function as a heat sink.

As illustrated in FIG. 1, a power board through hole 12 penetrating the power board 10 in the axial direction Z is formed at a center portion of the power board 10 in a plan view. The input end 32a of the rotating shaft 32 is inserted through the power board through hole 12. Thereby, an upper end (the input end 32a) of the rotating shaft 32 is positioned above the power board 10.

The control board 20 is disposed to face the power board 10 in the axial direction Z. More specifically, the power board 10 and the control board 20 are fixed to the frame 34 via a fixing member 39 with a predetermined distance therebetween in the axial direction Z. As the fixing member 39, for example, a screw may be employed, but this may be changed as appropriate as long as it is possible to fix the fixing member 39 to the frame 34. Also, the boards 10 and 20 may be fixed to the rear housing 31, the connector assembly 50, or the cover 70 instead of the frame 34.

In the present embodiment, the control board 20 is positioned above the power board 10. The control board 20 has a first surface 20a and a second surface 20b positioned on a side opposite to the first surface 20a. The first surface 20a is a surface directed upward. The second surface 20b is a surface directed downward and facing the power board 10.

A control circuit C is mounted on the first surface 20a of the control board 20. The control circuit C according to the present embodiment includes a microcontroller (microcomputer) 21, an input circuit 22, and a power supply circuit 24. Also, a pre-driver P is mounted on the first surface 20a of the control board 20 according to the present embodiment. Note that, the inverter circuit 11, the control circuit C, and the pre-driver P may be collectively referred to as an "electronic control unit (ECU)". Also, the ECU and the motor 2 may be collectively referred to as a "motor control unit (MCU)".

The pre-driver P drives the inverter circuit 11. More specifically, the pre-driver (FET driver) P drives the field effect transistor (FET) included in the inverter circuit 11.

The microcontroller 21 calculates a drive control of the motor 2. For example, the microcontroller 21 calculates an amount of a drive current supplied to each of the windings 38a of the motor 2 on the basis of a control signal acquired via the input circuit 22. On the basis of the calculation result, the microcontroller 21 controls switching of the inverter circuit 11 via the pre-driver P. The pre-driver P and the inverter circuit 11 exchange signals between the control board 20 and the power board 10. The power supply circuit 24 is a circuit that generates a power supply voltage required for an operation of an electronic circuit such as the microcontroller 21.

Although detailed illustrations are omitted, the input circuit 22 according to the present embodiment includes a torque sensor interface circuit and a vehicle communication interface circuit. The torque sensor interface circuit is a circuit for detecting a steering torque of a driver in the electric power steering device 100 and acquiring information on the steering torque. The vehicle communication interface circuit is a circuit for receiving information of various types from a vehicle system. Examples of communication standards handled by the vehicle communication interface circuit include a controller area network (CAN), FlexRay (registered trademark), and the like. The input circuit 22 outputs acquired signals (the above-described steering torque information and information of various types) to the microcontroller 21.

Also, a rotation sensor S is mounted on the second surface 20b of the control board 20. The rotation sensor S faces the sensor magnet 35 in the axial direction Z. The rotation sensor S detects a rotation angle of the rotating shaft 32 by detecting the magnetic field generated by the sensor magnet 35. Note that, a position of the sensor magnet 35 may be changed as appropriate as long as it is possible to detect the magnetic field generated by the sensor magnet 35 with high accuracy. For example, the rotation sensor S and the sensor magnet 35 may not face each other in the axial direction Z, and the sensor magnet 35 may be mounted on the first surface 20a of the control board 20.

Note that, as illustrated in FIG. 3, the pre-driver P may be mounted on the power board 10 instead of the control board 20. In this case, the microcontroller 21 and the pre-driver P exchange signals between the control board 20 and the power board 10. More specifically, a pulse width modulation (PWM) instruction issued by the microcontroller 21 to the pre-driver P may be performed via a serial peripheral interface (SPI) communication.

FIG. 4 is a view of the power board 10 and the control board 20 according to the present embodiment from above. Note that, in FIG. 4, illustrations of the control circuit C and pre-driver P are omitted. As illustrated in FIG. 4, at least a part of the power board 10 and at least a part of the control board 20 overlap each other when they are projected in the axial direction Z. Hereinafter, a region of the power board 10 and the control board 20 in which they overlap may be referred to as an overlapping region A1. As illustrated by the broken line in FIG. 4, the terminals 301u, 301v, and 301w of the motor 2 according to the present embodiment are electrically connected to the overlapping region A1 of the power board 10 (see also FIG. 1).

Also, as illustrated in FIG. 4, the power board 10 has at least one (four in the illustrated example) non-overlapping region A2 that does not overlap the control board 20 when it is projected in the axial direction Z. More specifically, in the present embodiment, a size of the control board 20 is smaller than the size of the power board 10. Thereby, end portions of the power board 10 are the non-overlapping region A2. Also, the control board 20 according to the present embodiment includes a control board through hole 23 formed to penetrate the control board 20 in the axial direction Z. Thereby, a portion of the power board 10 that overlaps the control board through hole 23 when it is projected in the axial direction Z is the non-overlapping region A2.

As illustrated in FIG. 1, the inter-board connector 40 is positioned between the power board 10 and the control board 20 in the axial direction Z. The inter-board connector 40 electrically connects the inverter circuit 11 and the control circuit C. As illustrated by the broken line in FIG. 4, the inter-board connector 40 according to the present embodiment is disposed to overlap the overlapping region A1 of the power board 10 and the control board 20 when it is projected in the axial direction Z. Note that, the drive device 1 includes only one inter-board connector 40 in the illustrated example, but the number of the inter-board connectors 40 may be changed as appropriate according to a layout of the boards 10 and 20, the number of necessary signals, or the like.

As illustrated in FIG. 1, the inter-board connector 40 according to the present embodiment includes a male connector 41 and a female connector 42. The connectors 41 and 42 each include a housing and a plurality of terminals (not illustrated) disposed inside the housing and responsible for electrical connection. The housing may be formed, for example, of a resin in its entirety, or may be partially formed of a metal. The housing of the male connector 41 and the housing of the female connector 42 are designed so that they fit to each other, and terminals of the connectors 41 and 42 are electrically connected to each other when they are fitted. The connectors 41 and 42 according to the present embodiment are connectors which are able of being surface mounted on a printed circuit board or the like by soldering. Note that, in the illustrated example, the male connector 41 is mounted on the power board 10 and the female connector 42 is mounted on the control board 20, but the male connector 41 may be mounted on the control board 20 and the female connector 42 may be mounted on the power board 10.

Also, the inter-board connector 40 may be a connector having a so-called floating structure in which the male connector 41 and the female connector 42 slide against each other. In this case, even if mounting positions of the connectors 41 and 42 are offset with respect to the board 10 and 20, it is possible to improve the poor fitting caused by the offset and to alleviate a stress applied to the connectors 41 and 42 after the fitting.

Note that, a configuration of the inter-board connector 40 is not limited to the above example, and may be changed as appropriate as long as it is possible to secure an electrical connection between the power board 10 and the control board 20 with high quality. For example, a configuration in which holes of a predetermined size and a predetermined number are provided in the boards 10 and 20 and the terminals are soldered to the holes may be employed. Alternatively, a configuration in which a predetermined surface mount connector is provided on each of the boards 10 and 20 and a harness or a so-called flexible flat cable (FFC) is fitted to the surface mount connector may be employed.

The cover 70 is a topped cylindrical member. An opening end of the cover 70 is in contact with an opening end of the frame 34. The power board 10 and the control board 20 are housed in a space surrounded by the cover 70 and the rear housing 31.

The connector assembly 50 according to the present embodiment is provided on an upper wall of the cover 70. In the axial direction Z, the stator 38 of the motor 2, the power board 10, the control board 20, and the connector assembly 50 are arranged in this order.

The connector assembly 50 is a component in which connectors, metal bus bars, terminals, and the like, and a holding member 53 that holds them are integrally molded. The holding member 53 is made of, for example, a resin. The connector assembly 50 connects a battery voltage line and a ground line required for controlling the motor 2 and driving the motor 2 to the boards 10 and 20. Also, the connector assembly 50 connects a signal transmission line for transmitting signals such as a torque sensor signal and a vehicle communication signal to the boards 10 and 20. In the connector assembly 50, the above-described lines may be combined into one. Alternatively, according to a design of the vehicle, the battery voltage line and the ground line may be separated from the signal transmission line to be disposed in separate connectors.

As illustrated in FIG. 1, the connector assembly 50 according to the present embodiment includes at least a first connector terminal 51 and a second connector terminal 52. The connector terminals 51 and 52 extend downward from the holding member 53. In the present embodiment, a lower end of the second connector terminal 52 is positioned below a lower end of the first connector terminal 51. The first connector terminal 51 is a terminal connected to the control board 20 to transmit signals such as the torque sensor signal and the vehicle communication signal to the control circuit C. That is, the first connector terminal 51 has at least a function of connecting the above-described signal transmission line to the control board 20. The second connector terminal 52 is a terminal connected to the power board 10 to supply power to the inverter circuit 11. That is, the second connector terminal 52 has at least a function of connecting the above-described battery voltage line to the power board 10. Although a method of connecting the terminals 51 and 52 and the respective boards 10 and 20 is not particularly limited, they may be electrically connected by, for example, press fitting. Alternatively, the terminals 51 and 52 may be inserted into through holes formed in the respective boards 10 and 20, and the through holes and the terminals 51 and 52 may be joined by solder. Terminals mounted on the respective boards 10 and 20 and the terminals 51 and 52 may be connected by welding.

As illustrated in FIG. 4 and FIG. 1, the second connector terminal 52 extending from the connector assembly 50 is inserted through the control board through hole 23 and linearly connects the connector assembly 50 and the non-overlapping region A2 of the power board 10. According to this configuration, it is possible to make a configuration of connecting the connector assembly 50 and the power board 10 smaller compared to a case in which, for example, the second connector terminal 52 extends to bypass the control board 20. Note that, a notch may be formed in the control board 20 instead of the control board through hole 23, and the second connector terminal 52 may be inserted through the notch. Also, as illustrated in FIGS. 1 and 4, the first connector terminal 51 extending from the connector assembly 50 is connected to the overlapping region A1 of the control board 20.

Next, an operation of the drive device 1 configured as above will be described.

There are cases in which a drive device used in an electric power steering device has a connector assembly connected to a board. The connector assembly has a role of connecting a battery voltage line, a ground line, and a signal transmission line that extend from the outside of the drive device to a board positioned inside the drive device. Here, if the drive device has two boards, a power board and a control board, a configuration in which the lines are each connected only to the control board is conceivable. In this case, the battery voltage line and the ground line necessary for an operation of the power board are connected to the power board via the control board. However, in such a configuration, there is a likelihood that a connection mechanism that connects the connector, the power board, and the control board will become enlarged, and this will cause an increase in size of the drive device. Also, if the control board relays the battery voltage line and the ground line, the control board must be designed to withstand a large amount of current flowing through these lines, and this may cause an increase in size and cost of the control board.

In contrast, in the drive device 1 according to the present embodiment, the connector terminals 51 and 52 extending from the connector assembly 50 are each directly connected to the boards 10 and 20 without interposing a board or the like. Thereby, the number of connection points of the inter-board connector 40 is reduced, thereby making it easier to reduce a size of the inter-board connector 40. That is, it is easier to realize reduction in size of the drive device 1. Also, it is possible to design the pattern mounted on the control board 20 with a low current circuit, and it is possible to simplify a configuration of the control board 20.

As described above, the drive device 1 according to the present embodiment configured to drive the motor 2 having the rotating shaft 32 includes the power board 10 on which the inverter circuit 11 driving the motor 2 is mounted, the control board 20 on which the control circuit C controlling driving of the motor 2 is mounted and disposed to face the power board 10 in the axial direction Z, the inter-board connector 40 electrically connecting the inverter circuit 11 and the control circuit C, and the connector assembly 50, in which the power board 10, the control board 20, and the connector assembly 50 are arranged in this order in the axial direction Z, and the connector assembly 50 includes the first connector terminal 51 connected to the control board 20 to transmit a signal to the control circuit C, and the second connector terminal 52 connected to the control board 20 to supply power to the inverter circuit 11.

According to this configuration, the connector terminals 51 and 52 are each directly connected to the boards 10 and 20. Therefore, it is possible to reduce a configuration of connecting the connector assembly 50, the power board 10, and the control board 20 in size. Thereby, it is easier to realize reduction in size of the drive device 1.

Also, the power board 10 has at least one non-overlapping region A2 that does not overlap the control board 20 when it is projected in the axial direction Z, and the second connector terminal 52 is connected to the non-overlapping region A2 of the power board 10. According to this configuration, it is possible to linearly connect the connector assembly 50 and the power board 10 using the second connector terminal 52. Thereby, it is possible to make a configuration of connecting the connector assembly 50 and the power board 10 smaller compared to a case in which, for example, the second connector terminal 52 extends to bypass the control board 20.

Also, the power board 10 and the control board 20 have at least one overlapping region A1 in which they overlap each other when they are projected in the axial direction Z, and the inter-board connector 40 is disposed to overlap the overlapping region A1 when it is projected in the axial direction Z. Due to this configuration, it is easier to realize reduction in diameter of the drive device 1.

Also, the terminal 301 of the motor 2 is connected to the overlapping region A1 of the power board 10. With this configuration, it is easier to realize reduction in diameter of the drive device 1.

Also, the rotating shaft 32 has the input end 32a at which the sensor magnet 35 is provided, the power board through hole (through hole) 12 through which the input end 32a of the rotating shaft 32 is inserted is formed in the power board 10, and the rotation sensor S detecting a magnetic field generated by the sensor magnet 35 is mounted on the control board 20. With this configuration, it is possible to detect a rotation angle of the rotating shaft 32 using the rotation sensor S. Also, when the rotation sensor S is mounted on the control board 20, it is possible to keep a large amount of current flowing in the inverter circuit 11 mounted on the power board 10 away from the rotation sensor S. Thereby, it is possible to reduce an influence of the magnetic field generated by the large amount of current on the rotation sensor S, and it is possible to improve a detection accuracy of the rotation sensor S. Also, since the rotation sensor S and the control circuit C are mounted on the same board, it is possible to reduce the number of terminals of the inter-board connector 40.

Also, the drive device 1 according to the present embodiment further includes the pre-driver P which drives the inverter circuit 11, the pre-driver P is mounted on the control board 20, and the pre-driver P and the inverter circuit 11 exchange signals between the control board 20 and the power board 10. With this configuration, it is possible to reduce the number of connection signals between the power board 10 and the control board 20.

Also, the pre-driver P may be mounted on the power board 10, the control circuit C may include the microcontroller 21 which calculates a drive control of the motor 2, and the microcontroller 21 and the pre-driver P may exchange signals between the control board 20 and the power board 10. Even with this configuration, it is possible to reduce the number of connection signals between the power board 10 and the control board 20 by using, for example, the SPI communication.

Also, the drive device 1 according to the present embodiment may further include the heat dissipation structure 61 dissipating heat generated by the electronic parts constituting the inverter circuit 11 to the rear housing 31 which houses the motor 2. According to this configuration, it is possible to efficiently dissipate heat generated by the electronic parts constituting the inverter circuit 11.

### Embodiment 2.

Next, embodiment 2 will be described, but basic configurations are the same as those of embodiment 1. Therefore, components which are the same are denoted by the same reference signs, description thereof will be omitted, and only different points will be described.

As illustrated in FIG. 5, in the present embodiment, a terminal 301 of a motor main body 30 is connected to a non-overlapping region A2 of a power board 10. More specifically, a control board 20 according to the present embodiment includes a notch 24 formed to open at an outer circumferential edge of the control board 20. Also, since the notch 24 is formed in the control board 20, a portion of the power board 10 that overlaps the notch 24 in an axial direction Z is the non-overlapping region A2. The terminal 301 according to the present embodiment is connected to the non-overlapping region A2. When the terminal 301 is connected to the non-overlapping region A2 of the power board 10, it is possible to suppress an adverse effect that heat generation of the terminal 301 exerts on the control circuit C mounted on the control board 20.

### Embodiment 3.

Next, embodiment 3 will be described, but basic configurations are the same as those of embodiment 1. Therefore, components which are the same are denoted by the same reference signs, description thereof will be omitted, and only different points will be described.

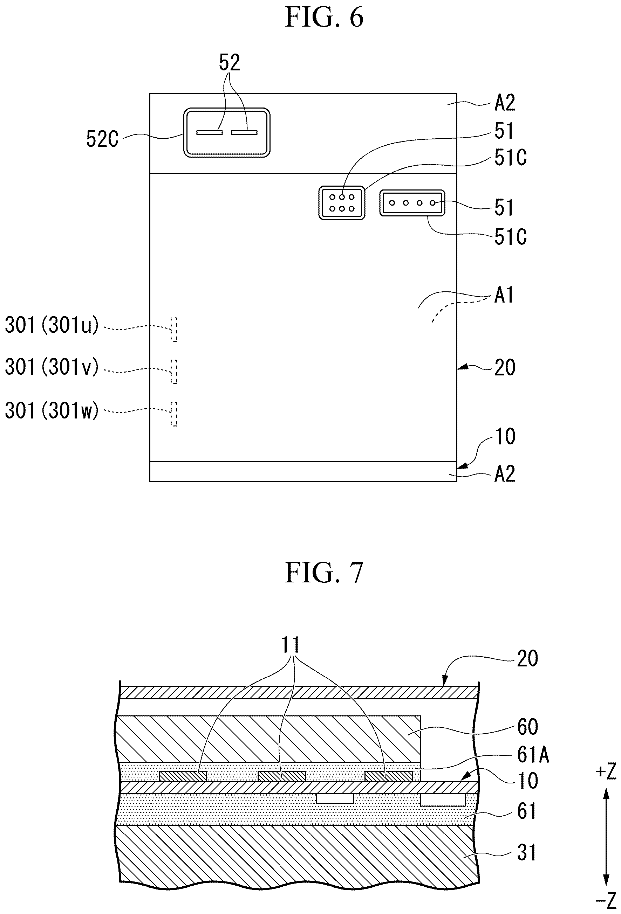

As illustrated in FIG. 6, in the present embodiment, a control board through hole 23 is not formed in a control board 20. Even in this case, when a size of the control board 20 is made sufficiently smaller than the size of a power board 10, it is possible to connect a second connector terminal 52 and the power board 10 to each other in a non-overlapping region A2 positioned at an end portion of the power board 10. Also, as illustrated in the illustrated example, the connector terminals 51 and 52 may constitute connectors 51C and 52C, respectively. Even with this configuration, since it is possible to linearly connect a connector assembly 50 and the power board 10 using the second connector terminal 52, it is possible to suppress connection parts becoming enlarged.

### Embodiment 4.

Next, embodiment 4 will be described, but basic configurations are the same as those of embodiment 1. Therefore, components which are the same are denoted by the same reference signs, description thereof will be omitted, and only different points will be described.

As illustrated in FIG. 7, a drive device 1 according to the present embodiment includes a heat sink 60. The heat sink 60 is positioned between a power board 10 and a control board 20 in an axial direction Z. Also, a second heat dissipation structure 61A in contact with both a lower surface of the heat sink 60 and an upper surface of the power board 10 is provided between the heat sink 60 and the power board 10. The heat sink 60 according to the present embodiment absorbs heat generated by electronic parts constituting an inverter circuit 11 via the second heat dissipation structure 61A. According to this configuration, since the heat generated by the electronic parts constituting the inverter circuit 11 is dissipated to both a rear housing 31 and the heat sink 60, it is possible to improve a heat dissipation efficiency. However, when the drive device 1 includes the heat sink 60, a heat dissipation structure 61 positioned between the power board 10 and the rear housing 31 may not be provided. That is, the heat generated by the electronic parts constituting the inverter circuit 11 may be dissipated only to the heat sink 60.

Note that, the modified examples described in each embodiment may be combined with each other, or the configuration according to each embodiment may be modified or omitted as appropriate.

For example, a so-called one-system drive device 1 and motor 2 has been described in the above-described embodiment, but the present disclosure may also be applied to a so-called two-system drive device 1 and motor 2. That is, the drive device 1 may have two sets of the control circuits C and two sets of the inverter circuits 11, and the motor 2 may have two sets of the terminals 301 (301u, 301v, and 301w). When the two sets of the inverter circuits 11 are configured to drive the motor 2 independently of each other, redundancy is secured. In this case, the two sets of the control circuits C may be mounted on the control board 20 to be divided point-symmetrically or line-symmetrically. Similarly, the two sets of the inverter circuits 11 may be mounted on the power board 10 to be divided point-symmetrically or line-symmetrically. The two sets of the terminals 301 (301u, 301v, and 301w), connectors, and the like may be disposed point-symmetrically or line-symmetrically.

### [Reference Signs List]

1 Drive device
2 Motor
10 Power board
11 Inverter circuit
Power board through hole (through hole)
20 Control board
21 Microcontroller
C Control circuit
P Pre-driver
S Rotation sensor
31 Rear housing
32 Rotating shaft
32a Input end
35 Sensor magnet
40 Inter-board connector
50 Connector assembly
51 First connector terminal
52 Second connector terminal
60 Heat sink
61 Heat dissipation structure
A1 Overlapping region
A2 Non-overlapping region
Z Axial direction

## Claims

1. A drive device driving a motor having a rotating shaft, comprising:
a power board on which an inverter circuit driving the motor is mounted;
a control board on which a control circuit controlling driving of the motor is mounted and disposed to face the power board in an axial direction of the rotating shaft;
an inter-board connector electrically connecting the inverter circuit and the control circuit; and
a connector assembly, wherein
the power board, the control board, and the connector assembly are arranged in this order in the axial direction, and
the connector assembly includes:
a first connector terminal connected to the control board to transmit a signal to the control circuit; and
a second connector terminal connected to the power board to supply power to the inverter circuit.

2. The drive device according to claim 1, wherein
the power board has at least one non-overlapping region which does not overlap the control board when it is projected in the axial direction, and
the second connector terminal is connected to the non-overlapping region of the power board.

3. The drive device according to claim 1 or 2, wherein
the control board and the power board have at least one overlapping region in which they overlap each other when they are projected in the axial direction, and
the inter-board connector is disposed to overlap the overlapping region when it is projected in the axial direction.

4. The drive device according to any one of claims 1 to 3, wherein
the control board and the power board have at least one overlapping region in which they overlap each other when they are projected in the axial direction, and
the terminal of the motor is connected to the overlapping region of the power board.

5. The drive device according to any one of claims 1 to 3, wherein
the power board has at least one non-overlapping region which does not overlap the control board when it is projected in the axial direction, and
the terminal of the motor is connected to the non-overlapping region of the power board.

6. The drive device according to any one of claims 1 to 5, wherein
the rotating shaft has an input end at which a sensor magnet is provided,
a through hole through which the input end of the rotating shaft is inserted is formed in the power board, and
a rotation sensor detecting a magnetic field generated by the sensor magnet is mounted on the control board.

7. The drive device according to any one of claims 1 to 6, further comprising a pre-driver which drives the inverter circuit, wherein
the pre-driver is mounted on the control board, and
the pre-driver and the inverter circuit exchange a signal between the control board and the power board.

8. The drive device according to any one of claims 1 to 6, further comprising a pre-driver which drives the inverter circuit, wherein
the pre-driver is mounted on the power board,
the control circuit includes a microcontroller which calculates a drive control of the motor, and
the microcontroller and the pre-driver exchange a signal between the control board and the power board.

9. The drive device according to any one of claims 1 to 8, further comprising a heat dissipation structure dissipating heat generated by electronic parts constituting the inverter circuit to a rear housing which houses the motor.

10. The drive device according to any one of claims 1 to 9, further comprising a heat sink provided between the power board and the control board in the axial direction and absorbing heat generated by electronic parts constituting the inverter circuit.
